# EUROPÄISCHE PATENTANMELDUNG

(11) **EP 0 693 360 A1**
(43) Veröffentlichungstag der Anmeldung: **24.01.1996**
(21) Anmeldenummer: 95110976.8
(22) Anmeldetag: 13.07.1995
(51) Int. Cl.: B29C 65/06, B23K 20/12

(54) **Schweissvorrichtung zum Reibschweissen**

(30) Priorität: 20.07.1994 DE 9411504 U
(71) Anmelder: WEGENER GmbH, D-52074 Aachen (DE)
(72) Erfinder: Gehde, Michael, Dr., D-52076 Aachen-Oberforstbach (DE)
(74) Vertreter: Paul, Dieter-Alfred, Dipl.-Ing.

(57) **Zusammenfassung**

Eine Schweißvorrichtung zum Reibschweißen von Werkstücken weist zwei Werkstückaufnahmen für die Fixierung je eines der beiden zu verschweißenden Werkstücke auf, wobei eine der Werkstückaufnahmen auf einer Kreisbahn ohne Eigendrehung beweglich geführt ist und mit einer einen Antriebsmotor aufweisenden Antriebseinrichtung zur Erzeugung dieser Bewegung verbunden ist. Damit die Vorrichtung konstruktiv einfach ist, weist die Antriebseinrichtung wenigstens eine Exzenterwelle (19, 20̸) mit einem Exzenter (57, 58) auf, der in eine zur beweglichen Werkstückaufnahme (15) gehörenden Lagerung (61, 62) einfaßt.

## Beschreibung

Die Erfindung betrifft eine Schweißvorrichtung zum Reibschweißen von Werkstücken insbesondere aus Kunststoff mit zwei Werkstückaufnahmen für die Fixierung je eines der beiden zu verschweißenden Werkstücke, wobei eine der Werkstückaufnahmen auf einer Kreisbahn ohne Eigendrehung beweglich geführt ist und mit einer einen Antriebsmotor aufweisenden Antriebseinrichtung zur Erzeugung dieser Bewegung verbunden ist.

Beim Reibschweißen wird der Schweißfuge keine Fremdwärme zugeführt, sondern die Erwärmung durch Bewegung der Fügeflächen gegeneinander unter Anpreßdruck erzeugt. Hierzu werden Schweißvorrichtungen verwendet, die zwei gegenüberliegende Werkstückaufnahmen aufweisen. Auf diese Werkstückaufnahmen können die zu verschweißenden Werkstücke, beispielsweise ein Behälter einerseits und ein Stutzen andererseits, aufgespannt werden. Die Werkstückaufnahmen sind gegeneinander verfahrbar, um die zu verschweißenden Werkstücke in Anlage zu bringen.

Quer zur Vorschubrichtung ist eine der Werkstückaufnahmen ortsfest gehalten, während die andere Werkstückaufnahme beweglich geführt ist, um eine Relativbewegung und damit Reibungswärme zwischen den beiden Werkstücken zu erzeugen. Die dabei aufgeprägte Bewegung kann liniar sein, aber auch auf einer Kreisbahn erfolgen. Im letzteren Fall ist die bewegliche Werkstückaufnahme so geführt, daß sie bei der Kreisbewegung keine Eigendrehung ausführt.

Der Erfindung liegt die Aufgabe zugrunde, eine Schweißvorrichtung der eingangs genannten Art so auszubilden, daß sie konstruktiv sehr einfach ist. Zusätzlich soll die Schweißvorrichtung in der Lage sein, Fügeteile ohne Versatz zu verschweißen.

Der erste Teil dieser Aufgabe wird erfindungsgemäß dadurch gelöst, daß die Antriebseinrichtung wenigstens eine Exzenterwelle mit einem Exzenter aufweist, der in einer zur beweglichen Werkstückaufnahme gehörenden Lagerung einfaßt. Vorzugsweise sollten wenigstens zwei Exzenterwellen vorhanden sein, welche synchron und drehwinkelgleich angetrieben sind und dann beide in Lagerungen der beweglichen Werkstückaufnahme einfassen.

Mit Hilfe einer solchen Antriebseinrichtung läßt sich auf sehr einfache Weise eine Orbitalbewegung der Werkstückaufnahme verwirklichen, also eine Bewegung auf einer Kreisbahn ohne Verdrehung der Werkstückaufnahme selbst. Sofern mehrere Exzenterwellen vorhanden sind, ergibt sich die Zwangsführung von selbst, d. h. es bedarf keiner zusätzlichen Führung. Dabei ist es relativ einfach, eine 10̸0̸ %ige Auswuchtung der beweglichen Werkstückaufnahme mit entsprechenden positiven Auswirkungen auf die Lärmentwicklung und Vibrationen zu erreichen.

In Ausbildung der Erfindung ist vorgesehen, daß die Exzentrizität jedes Exzenters über eine Verstelleinrichtung veränderbar ist. Hierdurch ist es möglich, die Schwingweite auf Formgebung und Material des Werkstücks abzustimmen. Dies kann je nach Art der Verstelleinrichtung durch Montage während des Stillstands der Vorrichtung geschehen, wobei es zweckmäßig ist, daß die Exzentrizität jedes Exzenters stufenlos veränderbar ist. Stattdessen kommt auch eine elektromotorische oder anderweitige Verstellung in Frage.

In weiterer Ausgestaltung der Erfindung ist vorgesehen, daß der Verstellbereich jeder Verstelleinrichtung auch die Exzentrizität Null umfaßt, bei der die Achsen von Exzenter und Exzenterwelle koaxial zueinander liegen. Eine solche Verstelleinrichtung sollte dann so gestaltet sein, daß die Exzentrizität während der Umdrehung der Exzenterwelle(n) einstellbar ist. Diese Einstellbarkeit ermöglicht es, die Exzenterwelle(n) ständig umlaufen zu lassen und den Schweißvorgang zu einem geeigneten Zeitpunkt durch Vergrößern der Exzentrizität von dem Wert Null auf einen für die jeweilige Werkstoffpaarung zweckmäßigen Wert zu vergrößern. Dabei kann der Prozeß dahingehend optimiert werden, daß zu Beginn eine relativ große Exzentrizität eingestellt wird, um im Fügebereich eine schnelle Plastifizierung des Werkstoffs zu erreichen, und daß zum Ende des Schweißvorgangs die Exzentrizität verringert wird, um eine hohe Nahtqualität und eine gute Wulstausbildung zu erzielen. Zum Prozeßende hin sollte dann die Exzentrizität wieder auf Null zurückgestellt werden, damit die Fügeteile genau positioniert sind. Da die Schwingbewegung dann schlagartig aufhört, findet ein Ausschwingen der Werkstückaufnahme, wie dies bei den herkömmlichen Maschinen geschieht, nicht mehr statt.

Der Vorzug einer solchen Verstellung der Exzentrizität liegt in erster Linie darin, daß kein Versatz zwischen den Werkstücken auftritt. Es ist also eine exakte Positionierung des einen gegenüber dem anderen Werkstück möglich. Außerdem wird die Prozeßzeit verkürzt, weil relativ schnell eine Verschmelzung im Fügebereich erzeugt werden kann. Da kein Versatz auftritt, eignet sich diese Schweißvorrichtung insbesondere für die Reibverschweißung von länglichen Werkstücken, wie beispielsweise Rohren oder Stangen, bei denen ein Versatz nicht zugelassen werden kann. Für diesen Zweck sollten die Werkstückaufnahmen seitliche Befestigungseinrichtungen aufweisen, die für die Fixierung von solchen länglichen Werkstücken geeignet sind.

Die Verstelleinrichtung für die stufenlose Verstellung der Exzentrizität des Exzenters bzw. der Exzenter kann auf konstruktiv sehr verschiedene Weise ausgeführt sein. So kann die Verstelleinrichtung einen oder mehrere elektronisch gesteuerte Schrittmotoren aufweisen, der bzw. die auf ein Verstellgetriebe wirkt bzw. wirken, welches direkt auf den Exzenter einwirkt, beispielsweise in Form einer Spindel oder dergleichen.

Eine andere Lösung besteht darin, daß jede Exzenterwelle eine mit der Antriebseinrichtung verbundene Antriebswelle und eine darin oder daran exzentrisch und achsparallel gelagerte Abtriebswelle aufweist, welche den Exzenter trägt, wobei zwischen An- und Abtriebswelle ein Verstellgetriebe der Verstelleinrichtung vorgesehen ist, mit dessen Hilfe eine Verdrehung der Abtriebswelle gegenüber der Antriebswelle zwischen einer Stellung des Exzenters, in der er koaxial zur Antriebswelle steht, und einer exzentrischen Stellung bewirkbar ist. Dies kann in der Weise ausgeführt sein, daß An- und Abtriebswelle jeweils eine Führungsbahn aufweisen, in die ein axial beweglicher Gleitstein einfaßt, der mit einer Steuereinrichtung verbunden ist, wobei die Führungsbahnen einen derartigen Verlauf haben, daß durch die Axialbewegung des Gleitsteins eine Relativverdrehung zwischen An- und Abtriebswelle bewirkbar ist. Selbstverständlich können pro Exzenterwelle auch mehrere solcher Führungsbahnen sowohl in An- und Abtriebswelle vorgesehen sein, wobei die zugehörigen Gleitsteine parallel beweglich sind. Dabei sollte sich die Führungsbahn in der Antriebswelle axial erstrecken und die in der Abtriebswelle schraubenförmig verlaufen.

In weiterer Ausgestaltung der Erfindung ist vorgesehen, daß die Drehzahl der Exzenterwelle(n) veränderbar ist, und zwar auch während der Umdrehung der Exzenterwelle(n) und stufenlos. Hierdurch kann die Sauberkeit der Schweißnaht günstig beeinflußt werden.

In der Zeichnung ist die Erfindung anhand von Ausführungsbeispielen näher veranschaulicht. Es zeigen:
- Figur 1: eine Seitenansicht einer erfindungsgemäßen Schweißvorrichtung mit Teilschnittdarstellung;
- Figur 2: eine Seitenansicht einer anderen erfindungsgemäßen Schweißeinrichtung mit Teilschnittdarstellung;
- Figur 3: einen Querschnitt durch einen Exzenterbereich bei den Vorrichtungen gemäß den Figuren 1 und 2 und
- Figur 4: einen Querschnitt in der Ebene A-A in Figur 3.

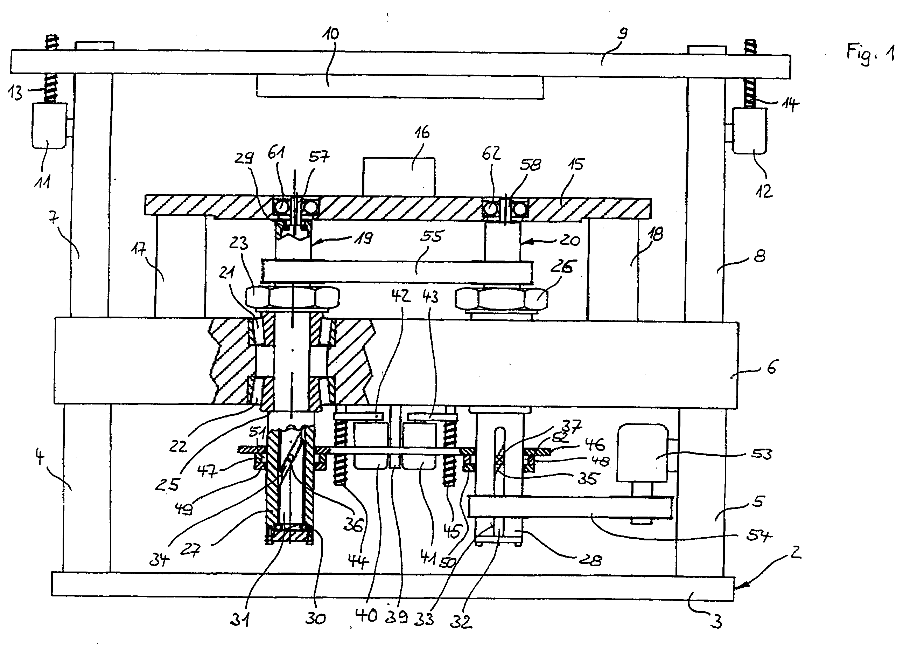

Die in Figur 1 dargestellte Schweißvorrichtung 1 weist einen Grundrahmen 2 auf, der aus einer Grundplatte 3, zwei seitlichen Ständern 4, 5 und einer diese verbindenden Brücke 6 besteht. Von der Oberseite der Brücke 6 gehen zwei Führungssäulen 7, 8 hoch, die oberhalb der Ständer 4, 5 angeordnet sind und die der Führung einer Werkstückaufnahmeplatte 9 dienen. An deren Unterseite ist mit hier nicht näher dargestellten Mitteln ein Werkstück 10̸ fixiert. An den Führungssäulen 7, 8 sind im oberen Bereich entgegengesetzt laufende Zustellmotoren 11, 12 angebracht, die als Ausgang Schneckenwellen 13, 14 haben, die in die Werkstückaufnahmeplatte 9 einfassen. Mit Hilfe der Zustellmotoren 11, 12 kann die Werkstückaufnahmeplatte 9 vertikal und parallel verfahren werden. In Querrichtung dazu ist sie durch die Führungssäulen 7, 8 geführt.

Im Abstand zu der Werkstückaufnahmeplatte 9 und unter dieser ist parallel dazu ein Schwingtisch 15 angeordnet, der ebenfalls als Werkstückaufnahme dient und an dessen Oberseite mit hier gleichfalls nicht näher dargestellten Mittel ein zweites Werkstück 16 aufgespannt ist. Der Schwingtisch 15 liegt gleitend auf den Stirnseiten von zwei Stützsäulen 17, 18 auf, die wiederum ortsfest auf der Brücke 6 angeordnet sind. Auf diese Weise kann sich der Schwingtisch 15 in seiner waagerechten Hauptebene bewegen.

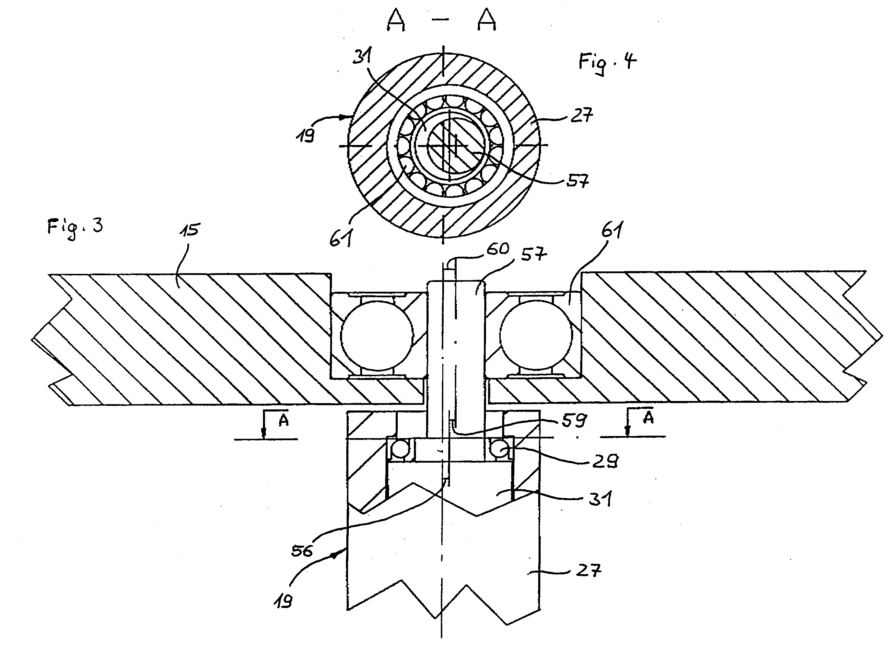

In der Brücke 6 sind im Abstand zueinander zwei Exzenterwellen 19, 20̸ gelagert, und zwar mit vertikaler Drehachse. Die Lagerung ist aus der Teilschnittdarstellung der in dieser Ansicht linken Exzenterwelle 19 gemäß den Figuren 3 und 4 zu ersehen und erfolgt über Kegelrollenlager 21, 22. Die Innenringe der Kegelrollenlager 21, 22 sind über eine Spannmutter 23 gegen einen Absatz 25 in der Exzenterwelle 19 verspannt. Die Lagerung der in dieser Ansicht rechten Exzenterwelle 20̸ ist entsprechend ausgebildet und durch die Spannmutter 26 verspannt.

Die Exzenterwellen 19, 20̸ sind im wesentlichen zweiteilig aufgebaut und bestehen jeweils aus einer hülsenförmigen Antriebswelle 27, 28 und einer darin über endseitige Rollenlager 29, 30̸ drehbar gelagerten Abtriebswelle 31, 32. Die Rollenlager 29, 30̸ sind so ausgebildet, daß sie die Abtriebswellen 31, 32 axial unverrückbar führen.

Im unteren Teil der Antriebswellen 27, 28 ist jeweils ein gerade ausgebildeter Vertikalschlitz 33 vorgesehen. Jedem Vertikalschlitz 33 gegenüber ist in die Außenmäntel der Antriebswellen 31, 32 jeweils eine sich schraubenförmig erstreckende Schrägnut 34, 35 eingeformt. In die Schrägnuten 34, 35 faßt jeweils ein Gleitstein 36, 37 ein. Die Gleitsteine 36, 37 durchfassen die Vertikalschlitze 33 und stehen über den Außenumfang der zugehörigen Antriebswellen 27, 28 vor.

An einer zwischen den Exzenterwellen 19, 20̸ angeordneten, von der Unterseite der Brücke 6 abgehenden Vertikalstrebe 39 sind beidseitig gegenläufige Verstellmotoren 40̸, 41 angebracht. Über Zahnriemen 42, 43 treiben sie zwei Vertikalspindeln 44, 45 an, die jeweils zwischen dem zugehörigen Verstellmotor 40̸, 41 und der benachbarten Exzenterwelle 19, 20̸ angeordnet und in der Brücke 6 drehbar gelagert sind. Sie ragen aus der Brücke 6 nach unten heraus und stehen mit einer waagerechten Verstellplattform 46 in Eingriff.

Die Verstellplattform 46 umfaßt die Außenseiten der Antriebswellen 27, 28 mit entsprechenden öffnungen, deren Innenseiten Abstand zu den Außenseiten der Antriebswellen 27, 28 haben. An der Unterseite der Verstellplattform 46 sind Halteringe 47, 48 angebracht, die jeweils die Exzenterwellen 19, 20̸ mit Abstandumgeben. An deren Unterseiten sind Ringscheiben 49, 50̸ fixiert, die nach innen bis nahe an den Umfang der Exzenterwellen 19, 20̸ vorspringen. Verstellplattform 46, Halteringe 47, 48 und Ringscheiben 49, 50̸ schließen Ringräume 51, 52 ein, in die die nach außen vorstehenden Teile der Gleitsteine 36, 37 jeweils einfassen. Dabei entspricht die Höhe der Haltering 47, 48 im wesentlichen der vertikalen Erstreckung dieser Teile der Gleitsteine 36, 37.

Die Exzenterwellen 19, 20̸ werden von einem elektrischen Antriebsmotor 53 angetrieben, der an dem in dieser Ansicht rechten Ständer 5 angebracht ist. Über einen Zahnriemen 54 versetzt er die in dieser Ansicht rechte Antriebswelle 28 in Drehung. Diese Drehbewegung wird über eine zweiten Zahnriemen 55 oberhalb der Brücke 6 von der rechten auf die linke Antriebswelle 27 übertragen. Auf diese Weise ist gesichert, daß beide Antriebswellen 27, 28 synchron und drehwinkelgleich angetrieben sind. Die über den Außenumfang der Antriebswellen 27, 28 vorstehenden Teile der Gleitsteine 36, 37 drehen sich dann innerhalb der Ringräume 51, 52 und werden dort vertikal geführt. Die Gleitsteine 36, 37 übertragen die Drehbewegung über die Schrägnuten 34, 35 auf die Abtriebswellen 31, 32.

Wie sich insbesondere aus Figur 3 ersehen läßt, die einen vergrößerten Teilschnitt durch den oberen Teil der linken Exzenterwelle 19 darstellt, sind die Abtriebswellen 31, 32 exzentrisch in den jeweils zugehörigen Antriebswellen 27, 28 gelagert, und zwar mit einem Versatz 56 zwischen den beiden Achsen. Dabei sind die Exzenterwellen 19, 20̸ derart synchronisiert, daß ihr jeweiliger Versatz 56 immer in die gleiche Richtung zeigt.

Die Stirnseiten der Abtriebswellen 31, 32 tragen Exzenterzapfen 57, 58. Deren Achsen haben jeweils einen Versatz 59 zur Achse der Abtriebswellen 31, 32, wobei auch diese Versatze 59 bei beiden Exzenterwellen 19, 20̸ immer gleichgerichtet sind. Das Maß des Versatzes 59 ist gleich dem Maß des Versatzes 56 zwischen den Antriebswellen 27, 28 und den Abtriebswellen 31, 32. In den der Stellung gemäß Figuren 3 und 4 liegen die Versatze 56 und 59 in einer Ebene, und zwar bei beiden Exzenterwellen 19, 20̸. Hierdurch ergibt sich eine Exzentrizität 60̸, die der Addition der Versatze 56, 59 entspricht.

Die Exzenterzapfen 57, 58 fassen in den Schwingtisch 15 ein und sind darin über Kugellager 61, 62 gelagert. Bei Verdrehung der Exzenterwellen 19, 20̸ entsteht aufgrund der Exzentrizität 60̸ eine Schwingbewegung auf einer Kreisbahn, deren Radius der Exzentrizität 60̸ entspricht.

Die vorbeschriebene Schweißvorrichtung 1 kann wie folgt betrieben werden.

Vor oder nach dem Aufspannen der Werkstücke 10̸, 16 wird die Verstellplattform 46 durch gleichzeitige Ansteuerung der Verstellmotoren 40̸, 41 vertikal parallel verfahren. Über die Führungen in den Ringräumen 51, 52 werden die Gleitsteine 36, 37 mitgenommen. Dies führt über die Schrägnuten 34, 35 zu einer Verdrehung der Abtriebswellen 31, 32 relativ zu den Antriebswellen 27, 28, und zwar unabhängig davon, ob sich die Antriebswellen 27, 28 - und damit auch die Abtriebswellen 31, 32 - angetrieben sind, also sich drehen oder nicht. Die Höhenbewegung der Verstellplattform 46 und damit die Relativverdrehung der Abtriebswellen 31, 32 wird solange fortgesetzt, bis die Achsen der Exzenterzapfen 57, 58 mit den Drehachsen der zugehörigen Exzenterwellen 19, 20̸ bzw. genauer der Antriebswellen 27, 28 zusammenfallen. Gegenüber der in den Figuren 3 und 4 gezeigten Stellung bedeutet dies eine Relativverdrehung um 180̸°. Dabei verringert sich das Maß der Exzentrizität 60̸ auf den Wert Null, und zwar bei beiden Exzenterwellen 19, 20̸. In diesem Zustand bleibt der Schwingtisch 15 bei angetriebenen Exzenterwellen 19, 20̸ bewegungslos.

Durch Ansteuerung der Zustellmotoren 11, 12 kann nun die Werkstückaufnahmeplatte 9 soweit abgesenkt werden, daß die Werkstücke 10̸, 16 zur Anlage kommen. Im Anschluß daran werden die Verstellmotoren 40̸, 41 angesteuert, wodurch die Verstellplattform 56 vertikal in die in Figur 1 gezeigte Stellung verfahren wird, so daß sich die in den Figuren 3 und 4 erkennbare, maximale Exzentrizität 60̸ einstellt und der Schwingtisch 15 die oben beschriebene Bewegung ausführt. Aufgrund der großen Exzentrizität 60̸ entsteht im Fügebereich der beiden Werkstücke 10̸, 16 schnell eine solch hohe Temperatur, daß er plastifiziert. Zur Erreichung einer guten Nahtqualität und Wulstausbildung wird dann die Exzentrizität 60̸ verringert durch Zurückfahren der Verstellplattform 46 und damit einer Relativbewegung der Abtriebswellen 31, 32 gegenüber den Antriebswellen 27, 28 in entgegengesetzter Richtung. Zum Prozeßende hin wird die Verstellplattform 46 soweit verfahren, daß das Maß der Exzentrizität 60̸ wieder zu Null wird. Die Werkstücke 10̸, 16 sind dann in der vorgesehenen Stellung genau positioniert. Nach Abschluß des Prozesses kann das dann aus den Werkstücken 10̸, 16 bestehende Produkt bei weiterlaufenden Exzenterwellen 19, 20̸ entnommen werden. Es können anschließend neue Werkstücke aufgespannt werden, ohne daß der Antrieb der Exzenterwelle 19, 20̸ unterbrochen werden muß.

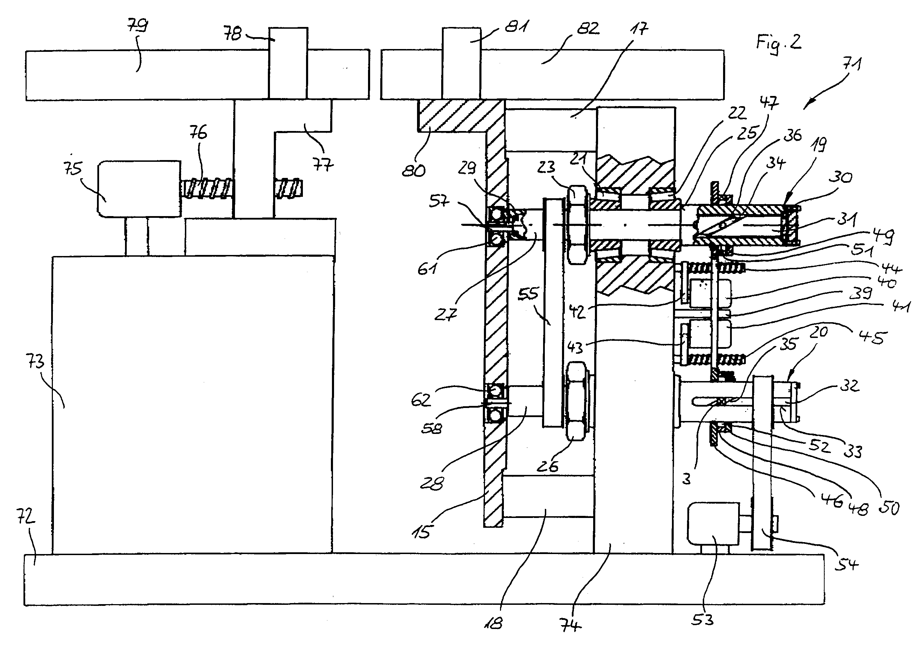

In Figur 2 ist eine weitere Schweißvorrichtung 71 dargestellt, die nicht prinzipiell von der Schweißvorrichtung 1 gemäß Figur 1 abweicht, jedoch die Verschweißung von langgestreckten Werkstücken ermöglicht. Sie hat eine Grundplatte 72, auf der linksseitig ein Block 73 angeordnet ist. Rechtsseitig steht von der Grundplatte 72 ein Ständer 74 hoch, der funktionsmäßig mit der Brücke 6 bei der Schweißvorrichtung 1 vergleichbar ist.

Auf dem Block 73 ist ein Zustellmotor 75 angebracht, der eine horizontal gerichtete Schneckenwelle 76 aufweist. Diese faßt in eine winkelförmige Werkstückaufnahme 77, welche untenseitig vertikal und gleitend abgestützt und horizontal geführt ist, was nicht näher dargestellt ist. Obenseitig hat die Werkstückaufnahme 77 eine Spanneinrichtung 78, die als Werkstück ein Rohr 79 umfaßt und fixiert.

Was den in dieser Ansicht rechten Teil der Schweißvorrichtung 71 angeht, kann zur Vermeidung von Wiederholungen auf die Beschreibung der Schweißvorrichtung 1 gemäß Figur 1 verwiesen werden, weshalb insoweit für gleiche bzw. funktionsgleiche Teile dieselben Bezugsziffern vorgesehen sind. Der einzige Unterschied besteht darin, daß der Ständer 74 im Gegensatz zur waagerechten Brücke 6 senkrecht steht und die darin gelagerten Exzenterwellen 19, 20̸ waagerecht ausgerichtet sind. Entsprechend verlaufen die Stützsäulen 17, 18 ebenfalls waagerecht und befindet sich der Schwingtisch 15 in einer Vertikalebene. Außerdem ist die Anordnung der Exzenterwellen 19, 20̸ und deshalb deren zeichnerische Darstellung gegenüber der gemäß Figur 1 spiegelverkehrt getroffen.

Der Schwingtisch 15 hat bei der Schweißvorrichtung 71 obenseitig einen waagerechten Fortsatz 80̸, auf dessen Oberseite eine Spanneinrichtung 81 sitzt, die als weiteres Werkstück ein Rohr 82 umfaßt und fixiert. Bei einer Schwingbewegung des Schwingtischs 15 in seiner vertikalen Hauptebene in der in Figur 1 beschriebenen Weise führt somit das Rohr 82 ebenfalls eine entsprechende Schwingbewegung aus, wodurch zwischen den Stirnflächen der Rohre 79, 82 nach deren Anlage Reibungswärme entsteht. Die Anlage wird durch Ansteuerung des Zustellmotors 75 bewirkt. Dabei kann derselbe Prozeßablauf wie bei dem Beispiel gemäß Figur 1 erzeugt werden, und zwar durch Verstellung der Exzentrizität in der dazu beschriebenen Weise. Da die Exzentrizität zum Schluß des Prozesses verringert und dann auf Null gestellt wird, werden die beiden Rohre 79, 82 ohne Versatz, d. h. koaxial zueinander verschweißt.

## Patentansprüche

1. Schweißvorrichtung zum Reibschweißen von Werkstücken mit zwei Werkstückaufnahmen für die Fixierung je eines der beiden zu verschweißenden Werkstücke, wobei eine der Werkstückaufnahmen auf einer Kreisbahn ohne Eigendrehung beweglich geführt ist und mit einer einen Antriebsmotor aufweisenden Antriebseinrichtung zur Erzeugung dieser Bewegung verbunden ist,
dadurch gekennzeichnet, daß die Antriebseinrichtung wenigstens eine Exzenterwelle (19, 20̸) mit einem Exzenter (57, 58) aufweist, der in eine zur beweglichen Werkstückaufnahme (15) gehörenden Lagerung (61, 62) einfaßt.

2. Schweißvorrichtung nach Anspruch 1,
dadurch gekennzeichnet, daß wenigstens zwei Exzenterwellen (19, 20̸) vorhanden sind, welche synchron und drehwinkelgleich angetrieben sind.

3. Schweißvorrichtung nach Anspruch 1 oder 2,
dadurch gekennzeichnet, daß die Exzentrizität (60̸) jedes Exzenters (57, 58) über eine Verstelleinrichtung veränderbar ist.

4. Schweißvorrichtung nach Anspruch 3,
dadurch gekennzeichnet, daß die Exzentrizität (60̸) jedes Exzenters (57, 58) stufenlos veränderbar ist.

5. Schweißvorrichtung nach Anspruch 3 oder 4,
dadurch gekennzeichnet, daß der Verstellbereich jeder Verstelleinrichtung auch die Exzentrizität Null umfaßt.

6. Schweißvorrichtung nach einem der Ansprüche 3 bis 5,
dadurch gekennzeichnet, daß die Verstelleinrichtung derart ausgebildet ist, daß die Exzentrizität (60̸) während der Umdrehung der Exzenterwelle(n) (19, 20̸) einstellbar ist.

7. Schweißvorrichtung nach einem der Ansprüche 3 bis 6,
dadurch gekennzeichnet, daß jede Exzenterwelle (19, 20̸) eine mit der Antriebseinrichtung (53) verbundene Antriebswelle (27, 28) und eine darin oder daran exzentrisch und achsparallel gelagerte Abtriebswelle (31, 32) aufweist, welche den Exzenter (57, 58) trägt, wobei zwischen An- und Abtriebswelle (27, 28, 31, 32) ein Verstellgetriebe (33, 34, 35, 36, 37) der Verstelleinrichtung vorgesehen ist, mit deren Hilfe eine Verdrehung der Abtriebswelle (31, 32) gegenüber der Antriebswelle (27, 28) zwischen einer Stellung des Exzenters (57, 58), in der er koaxial zur Antriebswelle (27, 28) steht, und einer exzentrischen Stellung bewirkbar ist.

8. Schweißvorrichtung nach Anspruch 7,
dadurch gekennzeichnet, daß An- und Abtriebswelle(n) (27, 28, 31, 32) jeweils eine Führungsbahn (33, 34, 35) aufweisen, in die ein axial beweglicher Gleitstein (36, 37) einfaßt, der mit einer Steuereinrichtung (46, 47, 48, 49, 50̸) verbunden ist, wobei die Führungsbahnen einen derartigen Verlauf haben, daß durch die Axialbewegung des jeweiligen Gleitsteins (36, 37) eine Relativverdrehung zwischen An- und Abtriebswelle(n) (27, 28, 31, 32) bewirkbar ist.

9. Schweißvorrichtung nach Anspruch 8,
dadurch gekennzeichnet, daß sich jeweils die Führungsbahn (33) in der Antriebswelle (27, 28) axial erstreckt und in der Abtriebswelle (31, 32) schraubenförmig verläuft.

10. Schweißvorrichtung nach einem der Ansprüche 3 bis 9,
dadurch gekennzeichnet, daß die Verstelleinrichtung einen elektronisch gesteuerten Sschrittmotor aufweist, der auf ein Verstellgetriebe wirkt.

11. Schweißvorrichtung nach einem der Ansprüche 1 bis 10̸,
dadurch gekennzeichnet, daß die Drehzahl der Exzenterwelle(n) (19, 20̸) veränderbar ist.

12. Schweißvorrichtung nach einem der Ansprüche 1 bis 11,
dadurch gekennzeichnet, daß die Werkstückaufnahmen (77, 80̸) seitliche Befestigungseinrichtungen (78, 81) für die Aufnahme von länglichen Werkstücken (79, 82) aufweisen.
